# EUROPÄISCHE PATENTSCHRIFT

(11) **EP 2 286 979 B1**
(45) Veröffentlichungstag und Bekanntmachung des Hinweises auf die Patenterteilung: **03.04.2013**
(21) Anmeldenummer: 10168593.1
(22) Anmeldetag: 06.07.2010
(51) Int. Cl.: B29C 49/48, B29C 47/88, B29C 49/00, B29C 49/04, B29C 33/04, B29C 47/12

(54) **Vorrichtung zur Herstellung von außen gewellten Rohren mit Muffen**
Device for producing externally corrugated pipes with sleeves
Dispositif de fabrication de tubes ondulés de l'extérieur et dotés de manchons

(30) Priorität: 22.08.2009 DE 102009038547
(43) Veröffentlichungstag der Anmeldung: 23.02.2011
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Manfred

(56) Entgegenhaltungen:
- EP-A1- 0 679 498
- EP-A2- 0 764 516
- DE-A1- 10 006 380
- DE-A1- 19 914 974
- DE-C1- 10 257 363

## Beschreibung

Die Erfindung betrifft eine Vorrichtung zur Herstellung von außen gewellten Rohren mit Muffen aus thermoplastischem Kunststoff nach dem Oberbegriff des Anspruches 1.

Derartige aus der EP 0 764 516 B1 (entspr. US-Patent 5 693 347) bekannte Vorrichtungen sind so ausgestaltet, dass ein erheblicher Teil der in der Kunststoffschmelze enthaltenen Energie durch Kühlung von außen über die Formabschnittshälften abgeführt wird. Soweit das normale gewellte Rohr hergestellt wird, wird ein kleinerer Teil der durch Kühlung abzuführenden in der Kunststoffschmelze enthaltenen Wärmeenergie über einen inneren Kühldorn abgeführt. Bei der Ausformung einer Muffe entfällt diese Kühlmöglichkeit. Je nach Wanddicke der auszuformenden Muffe führt dies zu unbefriedigenden Ergebnissen in der Qualität der Muffe.

Aus der DE 199 14 974 A1 ist es bekannt, bei einer Vorrichtung zur Herstellung von außen gewellten Rohren mit Muffen aus thermoplastischem Kunststoff gemäß dem Oberbegriff des Anspruchs 1, die Formabschnittshälften jeweils auf einer geschlossenen Bahn zu führen. Jeder geschlossenen Bahn ist eine Wechseleinrichtung zugeordnet, an der eine Formabschnittshälfte gegen eine andere ausgetauscht werden kann. An der Wechseleinrichtung ist eine Heizeinrichtung oder eine Kühleinrichtung vorgesehen, um Formabschnittshälften bzw. Wechsel-Formabschnittshälften aufzuheizen bzw. zu kühlen. Durch die Veränderung der Temperatur der Formabschnittshälften sollen besondere Effekte erzielt werden, wobei beispielsweise ein Kunststoff über eine längere Zeit durch die aufgeheizte Formabschnittshälfte in einem plastisch verformbaren Zustand gehalten werden kann, beispielsweise um kompliziertere Formen in dem Wellrohr bzw. einem Wellrohrabschnitt, einem Muffenabschnitt oder dergleichen auszuformen.

Der Erfindung liegt daher die Aufgabe zugrunde, eine Vorrichtung der gattungsgemäßen Art so auszugestalten, dass auch bei der Ausformung der Muffe eine ausreichende und zufriedenstellende Kühlung der Kunststoffschmelze sichergestellt ist.

Diese Aufgabe wird erfindungsgemäß bei einer Vorrichtung der gattungsgemäßen Art durch die Merkmale im Kennzeichnungsteil des Anspruches 1 gelöst. Der Kern der Erfindung liegt darin, dass die zur Ausformung der Muffe jeweils eingesetzten zusätzlichen Formabschnittshälften zwischen ihren im zeitlichen Abstand aufeinanderfolgenden Einsätzen temperiert, in der Regel also gekühlt werden. Da derartige Formabschnittshälften aus relativ großvolumigen Metallblöcken bestehen, die ein entsprechend hohes Wärmespeichervermögen besitzen, kann durch eine entsprechende Kühlung während der Zeit in der Parkposition erreicht werden, dass während der Ausformung der Muffe aufgrund einer entsprechend größeren Temperaturdifferenz zwischen dem warmplastischen Kunststoff und den Formabschnittshälften ein stärkerer Kühleffekt eintritt.

Die Weiterbildungen nach den Ansprüchen 2 bis 4 geben eine besonders einfache und vorteilhafte Ausgestaltung wieder.

Die Ansprüche 5 und 6 geben eine zweite vorteilhafte Ausgestaltung wieder.

Die Ansprüche 7 bis 9 geben Merkmale an, die in der Regel bei den erfindungsgemäßen Vorrichtungen vorhanden sind und die im Zusammenhang mit der Erfindung zumindest zweckmäßig sind.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Vorrichtung zur Herstellung von Rohren in Draufsicht,
- Fig. 2: eine Stirnansicht der Vorrichtung gemäß dem Sichtpfeil II in Fig. 1,
- Fig. 3: eine Stirnansicht einer ersten Ausführungsform der Vorrichtung gemäß dem Sichtpfeil III in Fig. 1,
- Fig. 4: einen Teil-Längsschnitt durch die Vorrichtung in vergrößerter Dar- stellung und
- Fig. 5: eine zweite Ausführungsform einer Vorrichtung in einer Darstel- lung gemäß Fig. 3.

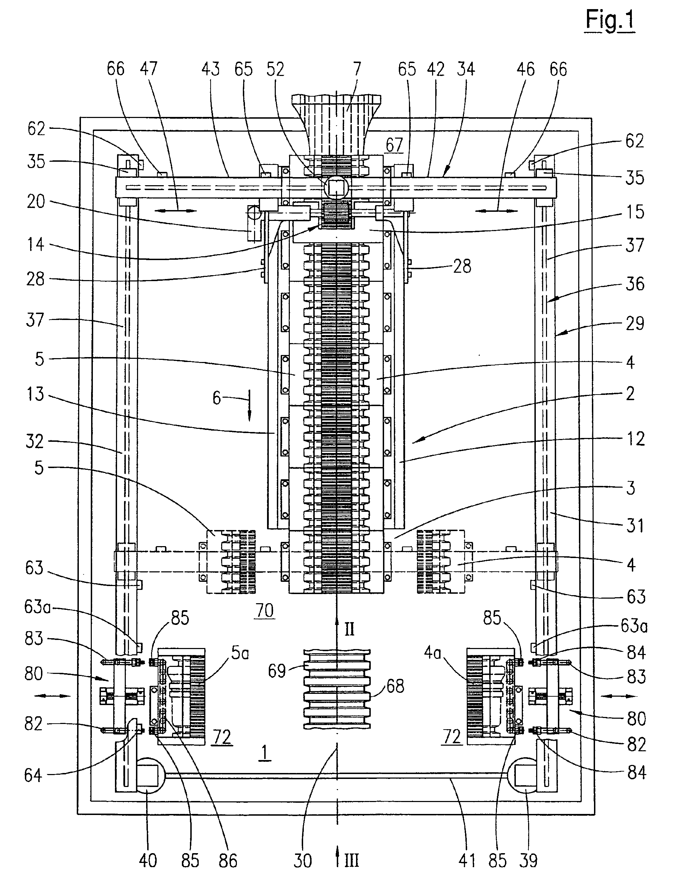

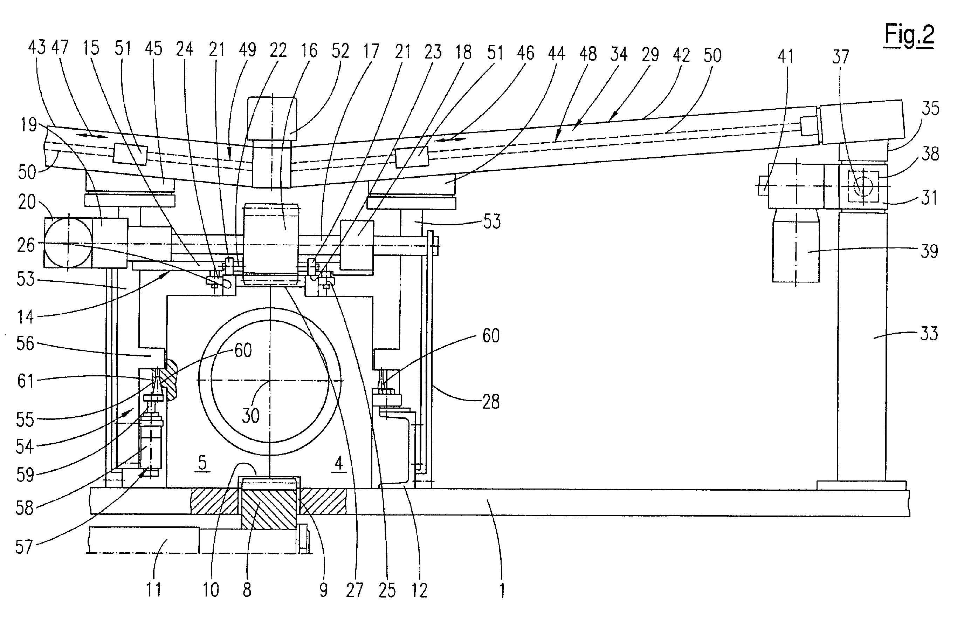

Die Fig. 1 und 2 zeigen eine Vorrichtung zur Herstellung von Rohren aus thermoplastischem Kunststoff mit Querprofilierung. Diese Vorrichtung weist eine Grundplatte 1 auf, auf der sich eine Formstrecke 2 befindet. Auf dieser Formstrecke 2 werden Formabschnitte 3 aneinandergereiht, die jeweils aus zwei Formabschnittshälften 4, 5 bestehen. Solange die Formabschnittshälften 4, 5 jeweils paarweise unter Bildung eines Formabschnitts 3 aneinanderliegen und solange benachbarte Formabschnitte 3 unter Bildung einer Form aneinanderliegen, bewegen sie sich geradlinig entsprechend einer Produktionsrichtung 6 auf der Grundplatte 1. Zum kontinuierlichen Antrieb der durch die Formabschnitte 3 gebildeten Form ist unmittelbar hinter einem Spritzkopf 7 eines Extruders ein unteres Antriebsritzel 8 vorgesehen, das durch eine Ausnehmung 9 in der Grundplatte 1 hindurchragt und in ein an der jeweiligen Unterseite der Formabschnittshälften 4, 5 ausgebildetes Zahnprofil 10 eingreift. Das untere Antriebsritzel 8 ist drehfest auf einer Antriebswelle 11 angebracht, die unterhalb der Grundplatte 1 gelagert ist und von einem nicht dargestellten Getriebe-Motor angetrieben wird. Die Formabschnittshälften 4, 5 werden auf der Formstrecke 2 jeweils durch Führungsleisten 12, 13 geführt bzw. zusammengehalten, die in dem der Grundplatte 1 benachbarten Bereich der Formabschnittshälften 4, 5 an diesen angreifen.

Oberhalb der Grundplatte 1 und oberhalb der Form ist eine Gegenlagerung 14 vorgesehen. Diese weist eine Basisplatte 15 auf, auf der ein oberes Antriebsritzel 16 gelagert ist. Dieses obere Antriebsritzel 16 ist ebenfalls drehfest an einer Antriebswelle 17 angebracht, die beidseitig in Lagern 18, 19 gelagert ist, die auf der Basisplatte 15 befestigt sind. Die Antriebswelle 17 wird von einem Getriebe-Motor 20 angetrieben, der an dem benachbarten Lager 18 angebracht ist. An der Unterseite der Basisplatte 15 sind Abstützrollen 21 mit horizontaler Drehachse 22 gelagert, die sich auf an der Oberseite jeder Formabschnittshälfte 4, 5 ausgebildeten Abstützflächen 23 abstützen, wodurch die Lage der Gegenlagerung 14 zu den Formabschnittshälften 4, 5 definiert wird. An der Unterseite der Basisplatte 15 sind weiterhin Führungsrollen 24 mit vertikaler Drehachse 25 gelagert, die seitlich an Führungsflächen 26 angreifen, die ebenfalls an der Oberseite der Formabschnittshälften 4, 5 ausgebildet sind. Mittels dieser Führungsrollen 24 werden zwei einen Formabschnitt 3 bildende Formabschnittshälften 4, 5 in ihrem oberen Bereich geführt bzw. zusammengehalten. Das obere Antriebsritzel 16 greift zwischen den Abstützflächen 23 bzw. den Führungsflächen 26 in ein Zahnprofil 27 ein, das an den Oberseiten der Formabschnittshälften 4, 5 ausgebildet ist. Über das obere Antriebsritzel 16 wird nur 1/3 bis 1/4 des Betrages der Vorschubkraft auf die Formabschnitte 3 übertragen, der durch das untere Antriebsritzel 8 auf die Formabschnitte 3 ausgeübt wird. Die Gegenlagerung 14 ist in auf der Grundplatte 1 angebrachten, vertikal von dieser hochstehenden Drehmoment-Stützen 28 abgestützt, die das vom Getriebe- Motor 20 auf die Gegenlagerung 14 ausgeübte Drehmoment auffangen. Die Gegenlagerung 14 selber liegt im Wesentlichen durch ihr Eigengewicht auf den Abstützflächen 23 auf. Dieses Eigengewicht reicht auch aus, die am Eingriff des oberen Antriebsritzels 16 in das Zahnprofil 27 auftretenden, vertikal nach oben auf die Gegenlagerung 14 wirkenden Kräfte zu kompensieren.

Oberhalb der Grundplatte 1 ist eine Transportvorrichtung 29 für die Formabschnittshälften 4, 5 vorgesehen. Diese Transportvorrichtung 29 ist nach Art eines Brückenkranes aufgebaut. Sie weist zwei parallel zur Transportrichtung 6, zur Mittel-Längs-Achse 30 der Formabschnitte 3 und zur Grundplatte 1 und parallel zueinander verlaufende Führungsschienen 31, 32 auf. Diese sind oberhalb der Gegenlagerung 14 angeordnet und über Stützen 33 gegenüber der Grundplatte 1 abgestützt. Auf den Führungsschienen 31, 32 ist eine Transport-Brücke 34 über Lauf-Wagen 35 abgestützt. Die Verschiebung der Transport-Brücke 34 auf den Führungsschienen 31, 32 erfolgt mittels Linearantrieben 36, die in der konkreten Ausgestaltung als Spindelantriebe ausgebildet sind. Diese Linearantriebe 36 weisen demzufolge auf den Führungsschienen 31, 32 angeordnete Gewindespindeln 37 auf, auf denen Gewindemuttern 38 angeordnet sind, die wiederum an den Lauf-Wagen 35 befestigt sind. Die Gewindespindeln 37 werden jeweils über einen Getriebe-Motor 39, 40 angetrieben, wobei diese beiden Getriebe-Motoren 39, 40 über eine horizontale und quer zu den Führungsschienen 31, 32 verlaufende Kuppel-Welle 41 zwangs-synchronisiert sind. Die beiden Gewindespindeln 37 werden also exakt drehzahlgleich angetrieben, so dass die Transport-Brücke 34 verkantungsfrei auf den Führungsschienen 31, 32 verfahren wird. Die Transport-Brücke 34 weist zwei Brücken-Abschnitte 42, 43 auf, die jeweils von den Führungsschienen 31, 32 aus gesehen aufeinanderzu zur Grundplatte 1 hin geneigt verlaufen. Der Abstand der Brücke 34 von der Grundplatte 1 ist also in ihrer Mitte, senkrecht oberhalb der Mittel- Längs-Achse 30 am geringsten. Auf den beiden Brücken-Abschnitten 42, 43 ist jeweils ein Transport-Wagen 44, 45 verfahrbar angeordnet, der in der jeweiligen Verfahrrichtung 46 bzw. 47 mittels eines Linearantriebs 48 bzw. 49 verschiebbar ist. Diese Linearantriebe 48, 49 bestehen im Wesentlichen aus jeweils einer im jeweiligen Brücken-Abschnitt 42 bzw. 43 gelagerten Gewindespindel 50, die in eine Gewindemutter 51 am jeweiligen Transport- Wagen 44 bzw. 45 eingreift. Die beiden Gewindespindeln 50 werden von einem gemeinsamen Getriebe-Motor 52 angetrieben. Die Getriebe-Motoren 39, 40 und der Getriebe-Motor 52 sind umsteuerbare Motoren, also für Vorwärts- und Rückwärtslauf geeignet.

An den Transport-Wagen 44 und 45 ist jeweils ein Transportarm 53 angebracht, der sich senkrecht nach unten erstreckt. An jedem Transportarm 53 ist eine Haltevorrichtung 54 für eine Formabschnittshälfte 4 bzw. 5 angebracht. Ihr zugeordnet ist an jeder Formabschnittshälfte 4 bzw. 5 ein Halte-Widerlager 55 ausgebildet. Jede Haltevorrichtung 54 weist eine obere Anlage 56 auf, gegen die von unten ein Halte-Widerlager 55 angedrückt wird. Zur Haltevorrichtung 54 gehört weiterhin eine Spannvorrichtung 57, die im Wesentlichen aus einem pneumatischen oder hydraulischen Kolben-Zylinder-Antrieb 58 besteht. An der Kolbenstange 59 dieses Antriebs 58 ist ein Verriegelungszapfen 60 ausgebildet, der bei entsprechender Betätigung des Antriebs 58 in eine Verriegelungsausnehmung 61 an der Unterseite des Halte-Widerlagers 55 eingreift und gleichzeitig das Widerlager 55 gegen die Anlage 56 drückt. In der in Fig. 2 links dargestellten Position ist die Haltevorrichtung 54 fest mit dem Halte-Widerlager 55 der benachbarten Formabschnittshälfte 4 bzw. 5 verriegelt; letztere ist also fest mit dem Transportarm 53 verbunden.

An den Führungsschienen 31, 32 sind Näherungsschalter 62, 63, 63a, 64 angeordnet, die bei Annäherung der Transport-Brücke 34 deren Position repräsentierende Signale an eine zentrale Steuerung abgeben, die nicht dargestellt ist. An der Transport-Brücke 34 sind ebenfalls Näherungsschalter 65, 66 angebracht, die eine innere bzw. eine äußere Position des jeweiligen Transport-Wagens 44, 45 repräsentierende Signale an die zentrale Steuereinheit abgeben.

Die Wirkungsweise ist wie folgt:

Aus dem Spritzkopf 7 des Extruders werden zwei Schläuche aus warmplastischem Kunststoff extrudiert, die am stromaufwärtigen Ende 67 der Formstrecke 2 in die Form eintreten und dort mittels Überdruck bzw. Vakuum und gegebenenfalls Stützluft zu einem Verbund-Rohr 68 verformt werden, das ein glattes Innen-Rohr 78 und ein gewelltes Außen-Rohr 69 aufweist, wie es im einzelnen aus der EP 0 563 575 A1 (entsprechend US-Patent 5 320 797) bekannt ist, worauf verwiesen werden darf.

Die aus den Formabschnitten 3 bestehende Form wandert in Produktionsrichtung 6 vor. Das in ihr erzeugte Rohr 68 wandert mit gleicher Geschwindigkeit mit. Wenn jeweils ein Formabschnitt 3 das stromabwärtige Ende 70 der Formstrecke 2 erreicht hat, müssen die beiden diesen Formabschnitt 3 bildenden Formabschnittshälften 4, 5 quer zur Produktionsrichtung 6 aus der Formstrecke 2 herausgenommen werden. Dies geschieht - wie in Fig. 1 gestrichelt dargestellt ist - mittels der durch die Transport-Wagen 44, 45 mit Transportarmen 53 gebildeten Querfördereinrichtungen. Die Transport-Brücke 34 wird während der letzten kurzen Wegstrecke des in Produktionsrichtung 6 letzten Formabschnitts 3 geschwindigkeitsgleich mit diesem mitgefahren, wobei die beiden Transport-Wagen 44, 45 in ihre einander benachbarte Position verfahren waren. In dieser Position sind die Haltevorrichtungen 54 mit den Halte-Widerlagern 55 der beiden Formabschnittshälften 4, 5 verriegelt worden. Bei Erreichen des stromabwärtigen Endes 70 werden die beiden Transport-Wagen 44, 45 aufgrund eines entsprechenden Signals der Näherungsschalter 63 auseinander gefahren, wozu der Getriebe-Motor 52 entsprechend angesteuert wird. Aufgrund der Neigung der beiden Brücken-Abschnitte 42, 43 werden die an den Transportarmen 53 gehaltenen Formabschnittshälften 4, 5 von der Grundplatte 1 abgehoben und reibungsfrei nach außen verfahren. Wenn die Transport-Wagen 44 die äußeren Näherungsschalter 66 erreichen, werden sie angehalten. Die Getriebe-Motoren 39, 40 werden angesteuert, so dass die Transport-Brücke 34 entgegen der Produktionsrichtung 6 bis zum stromaufwärtigen Ende 67 der Formstrecke 2 verfahren wird. Auch bei diesem Transport der Formabschnittshälften 4, 5 entgegen der Produktionsrichtung 6 stehen diese nicht in Berührung mit der Grundplatte 1, sondern befinden sich reibungsfrei oberhalb von dieser. Sie werden immer parallel zu sich selbst bewegt.

Bei Erreichen der stromaufwärtigen Näherungsschalter 62 werden die Getriebe-Motoren 39, 40 gestoppt, so dass die Transport-Brücke 34 stillsteht. Es wird dagegen der Getriebe-Motor 52 eingeschaltet und verfährt die Transport-Wagen 44, 45 nach innen zur Formstrecke hin und führt die beiden Formabschnittshälften 4, 5 am stromaufwärtigen Ende 67 quer zur Produktionsrichtung 6 in die Formstrecke 2 ein, wie in Fig. 1 und 2 ausgezogen dargestellt ist. Beim Verfahren der Transport-Wagen 44, 45 zur Formstrecke 2 hin werden aufgrund der Neigung der Brücken-Abschnitte 42, 43 die Formabschnittshälften 4, 5 wieder zur Grundplatte 1 hin abgesenkt, auf der sie zur Auflage kommen, wenn die beiden Formabschnittshälften 4, 5 eines Formabschnitts 3 einander berühren, wie es in Fig. 2 dargestellt ist. Anschließend wird die Transport-Brücke 34 in Produktionsrichtung 6 verfahren, bis die beiden bereits einen Formabschnitt 3 bildenden Formabschnittshälften 4, 5 an den in Produktionsrichtung 6 voreilenden Formabschnittshälften 4, 5 zur Anlage kommen und von den Antriebsritzeln 8 und 16 erfasst und weitergefördert werden. Dann werden die Spannvorrichtungen 57 gelöst und die Transportarme 53 jeweils wieder von der Formstrecke weg nach außen verfahren. Die Transport-Brücke 34 wird anschließend wieder bis zum stromabwärtigen Ende 70 verfahren, wie zuvor bereits beschrieben worden ist.

Auf der bisher beschriebenen Vorrichtung zur Herstellung von Rohren 68 werden zusätzlich Formabschnittshälften 4a, 5a zur Bildung eines zusätzlichen Formabschnitts 3a eingesetzt, und zwar weil in vorgegebenen Abständen in dem endlos herzustellenden Rohr 68 Muffen 71 ausgebildet' werden sollen, wie es an sich aus der EP 0 563 575 A1 (entsprechend US-Patent 5 320 797) bekannt ist. Die zusätzlichen - Formabschnittshälften 4a, 5a befinden sich im dargestellten Ausführungsbeispiel - bezogen auf die Produktionsrichtung 6 - stromabwärts des stromabwärtigen Endes 70 der Formstrecke 2 in einer Parkposition 72 auf der Grundplatte 1. Alternativ kann die jeweilige Parkposition 72 sich auch zwischen dem stromaufwärtigen Ende 67 und dem stromabwärtigen Ende 70 befinden. Sie kann sich auch - wie aus der EP 1 216 126 B1 bekannt ist - am stromaufwärtigen Ende 67 befinden. In diese Parkposition 72 kann die Transport-Brücke 34 verfahren werden. Die Parkposition 72 wird jeweils durch einen Sockel 73 auf der Grundplatte 1 gebildet, dessen Höhe über der Grundplatte 1 sich aus der Neigung der Brücken-Abschnitte 42, 43 ergibt. Der Sockel 73 ist jeweils so hoch, dass die jeweilige Formabschnittshälfte 4a bzw. 5a in der zugeordneten Stellung der sie tragenden Transportarme 53 auf diesem Sockel 73 aufsitzt. Dieser Parkposition 72 sind die Näherungsschalter 64 an den Führungsschienen 31, 32 zugeordnet. Wenn die zusätzlichen Formabschnittshälften 4a, 5a eingesetzt werden sollen, dann wird die Transport-Brücke 34 bis in die Parkposition 72 verfahren, und es erfolgt ein Verriegeln der zusätzlichen Formabschnittshälften 4a, 5a mit den Transportarmen 53 der Transport-Wagen 44, 45. Anschließend erfolgt der Transport entgegen der Produktionsrichtung 6 in der bereits geschilderten Weise, bis die beiden zusätzlichen Formabschnittshälften 4a, 5a am stromaufwärtigen Ende 67 in die Formstrecke 2 eingeführt sind. In diesem Fall kommen anstelle der Näherungsschalter 63 in Produktionsrichtung 6 stromabwärts versetzte Näherungsschalter 63a zum Einsatz, die die Funktion der Näherungsschalter 63 haben. Selbstverständlich müssen die zusätzlichen Formabschnittshälften 4a, 5a nicht in den Umlauf der Formabschnittshälften 4, 5 einbezogen sein; sie können nach jedem Durchgang durch die Formstrecke 2 wieder in ihre Parkposition 72 verbracht werden und erst zu einem späteren Zeitpunkt wieder eingesetzt werden. Dies hängt ausschließlich davon ab, wie lang die Formstrecke 2 und wie lang die Rohrabschnitte sein sollen, denen jeweils eine Muffe 71 zugeordnet ist.

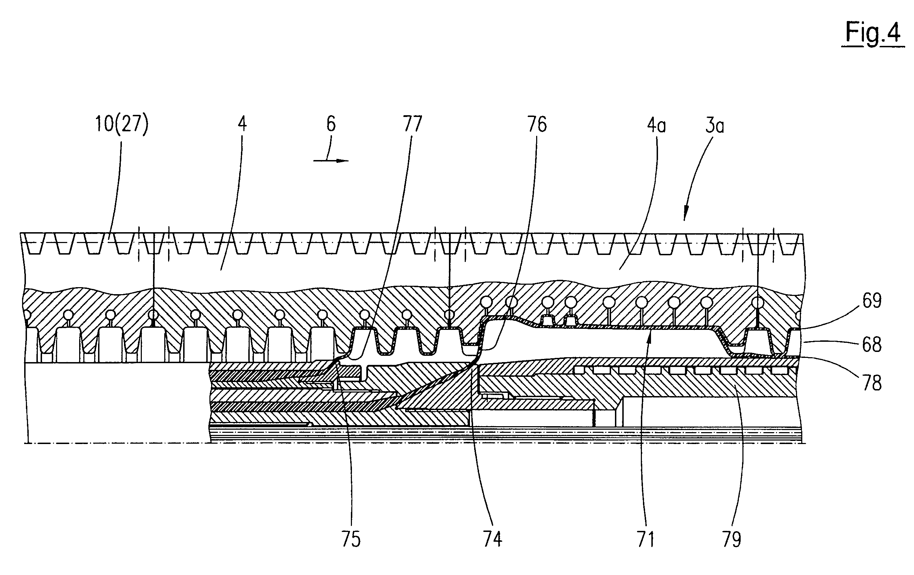

Wie sich aus Fig. 4 ergibt, erfolgt die Herstellung des Verbund-Rohres 68 mit Muffen 71 in der aus der EP 0 563 575 A1 (entspr. US-Patent 5,320,797) bekannten Weise. Der Spritzkopf 7 weist eine Innen-Düse 74 und eine Außen-Düse 75 auf, aus denen zwei warmplastische KunststoffSchläuche, nämlich ein Innen-Schlauch 76 und ein Außen-Schlauch 77, extrudiert werden, die jeweils nach der Formung und Verschweißung miteinander das aus einem gewellten Außen-Rohr 69 und einem glatten Innen-Rohr 78 bestehende Verbund-Rohr 68 bilden. In dem Formabschnitt 3a werden der Innen-Schlauch 76 und der Außen-Schlauch 77 aufgeweitet und vollflächig unter Bildung der Muffe 71 miteinander verschweißt.

Dort, wo das normale außen gewellte Verbund-Rohr 68 hergestellt wird, wird in den Formabschnitten 3 der Innen-Schlauch 76 über einen am Spritzkopf 7 angebrachten, den Düsen 74, 75 in Produktionsrichtung 6 nachgeordneten Kühldorn 79 geführt. Hierbei wird der Innen-Schlauch 76 kalibriert und gekühlt, also verfestigt. Das Abkühlen des Außen-Schlauches 77 und damit dessen Verfestigung zum Außen-Rohr 69 erfolgt primär über die in der Regel mit Wasser gekühlten Formabschnittshälften 4,5.

Wie aus Fig. 4 ersichtlich ist, kommt der Innen-Schlauch 76 während der Ausbildung der Muffe 71 aufgrund des Aufweitens beider Schläuche 76, 77 nicht zur Anlage am Kühldorn 79; während der Herstellung der Muffe 71 erfolgt also nur eine reduzierte Kühlung insbesondere des Innen-Schlauches 76 im Bereich der zu bildenden Muffe 71.

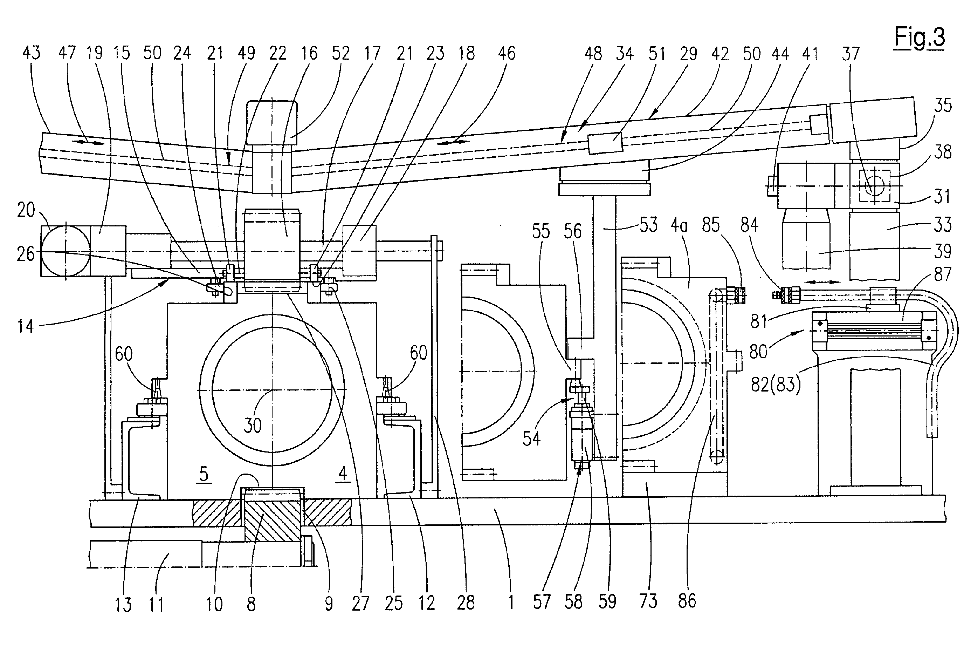

Wie sich aus Fig. 1 und Fig. 3 ergibt, ist den Parkpositionen 72 für die Formabschnittshälften 4a und 5a jeweils eine Temperier-Station 80 zugeordnet, die bei dem Ausführungsbeispiel nach den Fig. 1 und 3 jeweils eine auf einem Schlitten 81 quer zur Produktionsrichtung 6 zu der auf dem Sockel 73 geparkten Formabschnittshälfte 4a bzw. 5a verfahrbare Zuführ-Leitung 82 für ein flüssiges Temperiermedium und eine Abführ-Leitung 83 für dieses Medium aufweist. Die Leitungen 82, 83 sind mit Kupplungen 84 versehen, die mit Gegen-Kupplungen 85 an den Formabschnittshälften 4a bzw. 5a in dichten Eingriff bringbar sind. Die Gegen-Kupplungen 85 befinden sich am Anfang und Ende eines in der jeweiligen Formabschnittshälfte 4a bzw. 5a ausgebildeten Temperier-Kanals 86, der unabhängig von einem in allen Formabschnittshälften 4, 5, 4a, 5a ausgebildeten Kühlkanal ausgebildet ist. Als Temperier-Medium, und zwar insbesondere als KühlMedium, wird zweckmäßigerweise Wasser eingesetzt.

Der Schlitten 81 wird mittels eines Linear-Motors 87 zwischen zwei Endlagen verfahren, von denen eine in den Fig. 1 und 3 dargestellt ist. Bei einem solchen Linear-Motor 87 kann es sich beispielsweise um einen kolbenstangenlosen Hydraulik- oder Pneumatik-Zylinder handeln. Die Ansteuerung erfolgt von der nicht dargestellten Steuerung der gesamten Vorrichtung, wobei diese Ansteuerung in den Transport der Formabschnittshälften 4a, 5a in die Parkposition 72 oder aus dieser Parkposition 72 heraus eingegliedert wird.

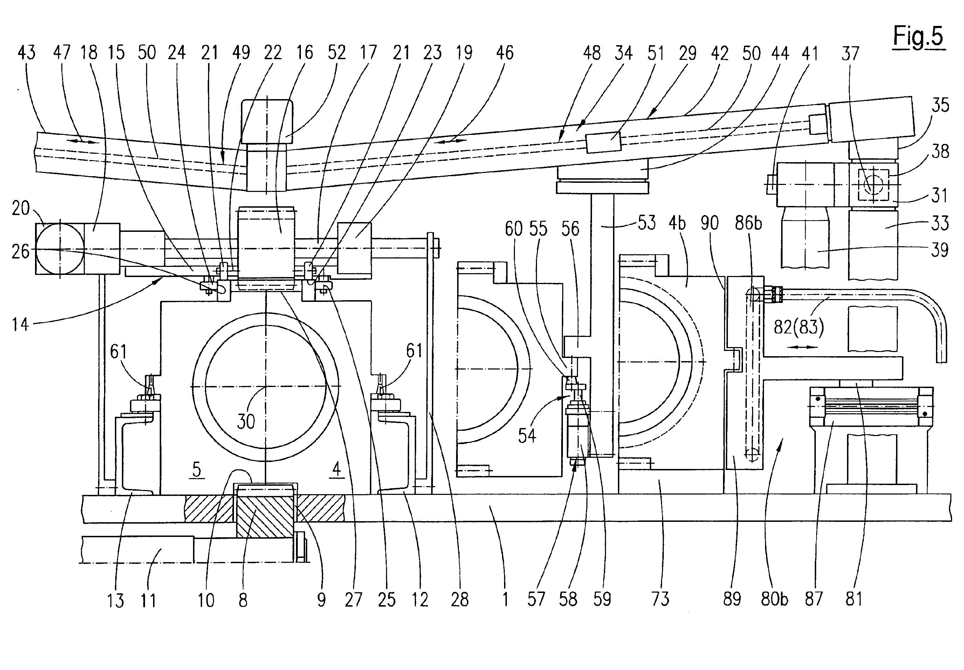

Bei dem Ausführungsbeispiel nach Fig. 5 sind in den Formabschnittshälften 4b keine Temperier-Kanäle ausgebildet. An der Temperier-Station 80b ist ein jeweils im Grundsatz gleichartig wie beim Ausführungsbeispiel nach Fig. 3 ausgebildeter Schlitten 81 vorgesehen, an dem jeweils eine Kühlplatte 89 angebracht ist, die an die der Temperier-Station 80b zugewandte äußere Seitenwand 90 der jeweiligen Formabschnittshälfte 4b vollflächig angelegt werden kann, so dass ein guter Wärmefluss von der aus Metall bestehenden Formabschnittshälfte 4b auf die ebenfalls aus Metall bestehende Kühlplatte 89 erfolgt. In der Kühlplatte 89 ist ein Temperier-Kanal 86b ausgebildet, der in gleicher Weise wie beim Ausführungsbeispiel nach Fig. 3 an eine Zuführ-Leitung 82 und eine Abführ-Leitung 83 für ein fließfähiges Kühlmedium, in der Regel also Kühlwasser, angeschlossen ist. Die übrige Ausgestaltung der Temperier-Station 80b entspricht der der Temperier-Station 80.

## Patentansprüche

1. Vorrichtung zur Herstellung von außen gewellten Rohren mit Muffen (71) aus thermoplastischem Kunststoff, mit im Anschluss an einen Spritzkopf (7) in zwei einander gegenüberliegenden Reihen angeordneten, im Kreislauf geführten Fonnabschnittshälften (4, 5), die sich paarweise entlang einer geraden Formstrecke (2) zu einer geschlossenen Hohlform ergänzen, wobei jede der nicht miteinander verbundenen Formabschnittshälften (4, 5) einer Reihe mittels einer Transportvorrichtung (29) am stromabwärtigen Ende (70) der Formstrecke (2) im Wesentlichen quer zur Produktionsrichtung (6) aus der Formstrecke (2) herausgeführt und zum stromaufwärtigen Ende (67) der Formstrecke (2) zurückgeführt und dort wieder in die Formstrecke (2) hineingeführt wird, und wobei beiderseits der Formstrecke (2) jeweils mindestens eine Parkposition (72) für eine zur Ausformung der Muffe (71) dienende zusätzliche Formabschnittshälfte (4a, 5a; 4b) vorgesehen ist, die von der Transportvorrichtung (29) anfahrbar ist,
**dadurch gekennzeichnet,**
**dass** den Parkpositionen (72) jeweils eine Temperier-Station (80, 80a, 80b) für eine zusätzliche Formabschnittshälfte (4a, 5a; 4b) zugeordnet ist,
**dass** die jeweilige Temperier-Station (80, 80b) mit einer Zuführ-Leitung (82) und einer Abfuhr-Leitung (83) für ein fließfähiges Kühlmedium versehen ist, und
**dass** die Zuführ-Leitung (82) und die Abführ-Leitung (83) an einem Schlitten (81) angeordnet sind, der in Richtung zu einer in einer Parkposition (72) befindlichen zusätzlichen Formabschnittshälfte (4a, 5a) und von dieser weg verschiebbar ist.

2. Vorrichtung nach Anspruch 1, **dadurch gekennzeichnet,**
**dass** die Temperier-Station (80, 80a) zur Zuführung eines fließfähigen Kühhmediums zur jeweiligen zusätzlichen Formabschnittshälfte (4a, 5a) ausgebildet ist.

3. Vorrichtung nach Anspruch 2, **dadurch gekennzeichnet,**
**dass** die Zufuhr-Leitung (82) und die Abfuhr-Leitung (83) jeweils an einen in der jeweiligen zusätzlichen Formabschnittshälfte (4a, 5a) ausgebildeten Temperier-Kanal (86) anschließbar sind.

4. Vorrichtung nach Anspruch 3, **dadurch gekennzeichnet,**
**dass** die Zuführ-Leitung (82) und die Abführ-Leitung (83) jeweils mit einer Kupplung (84) zur lösbaren Verbindung mit jeweils einer dem Temperier-Kanal (86) zugeordneten Gegen-Kupplung (85) versehen sind.

5. Vorrichtung nach Anspruch 1, **dadurch gekennzeichnet,**
**dass** die Temperier-Station (80b) mit einer Kühlplatte (89) versehen ist, die gegen eine zugewandte Seitenwand (90) der zusätzlichen Formabschnittshälfte (4b) flächig zur Anlage bringbar ist.

6. Vorrichtung nach Anspruch 5, **dadurch gekennzeichnet,**
**dass** die Kühlplatte (89) an dem Schlitten (81) angeordnet ist.

7. Vorrichtung nach einem der Ansprüche 1 bis 6, **dadurch gekennzeichnet,**
**dass** die zusätzlichen Formabschnittshälften (4a, 5a; 4b) aus Metall bestehen.

8. Vorrichtung nach einem der Ansprüche 1 bis 7, **dadurch gekennzeichnet,**
**dass** sie zur Herstellung von Verbund-Rohren (68) ausgebildet ist, die aus einem gewellten Außen-Rohr (69) und einem glatten Innen-Rohr (78) bestehen, wobei die Muffen (71) zweilagig ausgebildet sind.

9. Vorrichtung nach einem der Ansprüche 1 bis 8, **dadurch gekennzeichnet,**
**dass** im Bereich des stromaufwärtigen Endes (67) der Formstrecke (2) ein in die Formstrecke (2) hineinragender Kühldorn (79) vorgesehen ist.

## Claims

1. Device for producing externally corrugated pipes with sleeves (71) made of thermoplastic material, comprising mould section halves (4, 5) which are guided in a circuit and are arranged adjoining an injection head (7) in two opposite rows, which mould section halves complement one another in pairs along a straight mould section (2) to form a closed hollow mould, wherein each of the mould section halves (4, 5) of a row not connected to one another is guided out of the mould section (2) by means of a transport device (29) at the downstream end (70) of the mould section (2) essentially perpendicular to the direction of production (6) and returned to the upstream end (67) of the mould section (2) and there reinserted into the mould section (2), and wherein on both sides of the mould section (2) respectively at least one park position (72) is provided for an additional mould section half (4a, 5a; 4b) for shaping the sleeve (71) which can be approached by the transport device (29),
**characterised in that**
a tempering station (80, 80a, 80b) for an additional mould section half (4a, 5a; 4b) is assigned respectively to the park positions (72),
**in that** the respective tempering station (80, 80b) is provided with an inlet pipe (82) and an outlet pipe (83) for a flowable cooling medium and
**in that** the inlet pipe (82) and the outlet pipe (83) are arranged on a carriage (81) which can be displaced in the direction of an additional mould section half (4a, 5a) located in a park position and away from the latter.

2. Device according to claim 1, **characterised in that** the tempering station (80, 80a) is configured for supplying a flowable cooling medium to the respective additional mould section half (4a, 5a).

3. Device according to claim 2, **characterised in that** the inlet pipe (82) and the outlet pipe (83) can be connected respectively to a tempering channel (86) formed in the respective additional mould section half (4a, 5a).

4. Device according to claim 3, **characterised in that** the inlet pipe (82) and the outlet pipe (83) are provided respectively with a coupling (84) for forming respectively a detachable connection with a counter coupling (85) assigned to the tempering channel (86).

5. Device according to claim 1, **characterised in that** the tempering station (80b) is provided with a cooling plate (89), which can be moved to bear flat against a facing side wall (90) of the additional mould section half (4b).

6. Device according to claim 5, **characterised in that** the cooling plate (89) is arranged on the carriage (81).

7. Device according to any one of claims 1 to 6, **characterised in that** the additional mould section halves (4a, 5a; 4b) are made of metal.

8. Device according to any one of claims 1 to 7, **characterised in that** it is configured for the production of composite pipes (68), which consist of a corrugated external pipe (69) and a smooth inner pipe (78), the sleeves (71) being configured in two layers.

9. Device according to any one of claims 1 to 8, **characterised in that** in the area of the upstream end (67) of the mould section (2) a cooling spike (79) projecting into the mould section (2) is provided.

## Revendications

1. Dispositif de fabrication de tubes ondulés de l'extérieur comprenant des manchons (71) à base d'un matériau thermoplastique, comprenant deux demies parties de moule (4, 5), disposées en rangées l'une à côté de l'autre, formant un circuit fermé à la jonction au niveau d'une tête de pulvérisation (7), parties qui se complètent par paires le long d'un parcours de formage (2) linéaire pour former un moule creux fermé, où chaque fois, les demies parties de moule (4, 5) dans une rangée qui ne sont pas reliées ensemble sont exclues du circuit au moyen d'un dispositif de transport (29) à l'extrémité en aval du flux (70) du parcours de formage (2) et sont recyclées vers l'extrémité en amont du flux (67) du parcours de formage (2) et à cet endroit, sont à nouveau injectées dans le parcours de formage (2), et où, des deux côtés du parcours de formage (2), chaque fois au moins un emplacement de parcage (72), qui est accessible au dispositif de transport (29), pour une demie partie de moule (4a, 5a ; 4b) supplémentaire servant à la mise en forme du manchon (71), est prévu,
**caractérisé en ce**
**que** chaque fois, un poste de thermostatation (80, 80a, 80b) pour une demie partie de moule (4a, 5a ; 4b) complémentaire est disposé adjacent aux emplacements de parcage (72),
**que** chaque poste de thermostatation (80, 80b) est muni d'une canalisation d'amenée (82) et d'une canalisation d'évacuation (83) pour un milieu de refroidissement fluide, et
**que** la canalisation d'amenée (82) et la canalisation d'évacuation (83) sont disposées sur un chariot (81) qui peut être déplacé en direction d'une demie partie de moule (4a, 5a) complémentaire se trouvant dans un emplacement de parcage (72) et en être déplacé.

2. Dispositif selon la revendication 1 **caractérisé en ce**
**que** le poste de thermostatation (80, 80a) est conçu pour l'introduction d'un milieu de refroidissement fluide vers chaque demie partie de moule (4a, 5a) complémentaire.

3. Dispositif selon la revendication 2 **caractérisé en ce**
**que** la canalisation d'amenée (82) et la canalisation d'évacuation (83) peuvent être branchées chaque fois sur le canal de thermostatation (86) formé par l'une des demi-parties de moule (4a, 5a) respective.

4. Dispositif selon la revendication 3 **caractérisé en ce**
**que** la canalisation d'amenée (82) et la canalisation d'évacuation (83) sont chacune munies d'un embrayage (84) pour une liaison pouvant être desserrée avec un contre-embrayage (85) disposé avec l'un des canaux de thermostatation (86) respectif.

5. Dispositif selon la revendication 1 **caractérisé en ce**
**que** le poste de thermostatation (80b) est muni d'un plateau de refroidissement (89) qui peut être rapporté à plat en appui contre une paroi latérale (90) de la demi-partie de moule (4b) orientée vers lui.

6. Dispositif selon la revendication 5 **caractérisé en ce**
**que** le plateau de refroidissement (89) est disposé sur le chariot (81).

7. Dispositif selon l'une des revendications de 1 à 6 **caractérisé en ce**
**que** les demies parties de moule (4a, 5a ; 4b) complémentaires sont constituées de métal.

8. Dispositif selon l'une des revendications de 1 à 7 **caractérisé en ce**
**qu'**il est conçu pour la fabrication de tubes de liaison (68) qui sont formés d'un tube ondulé à l'extérieur (69) et d'un tube interne lisse (78), les manchons (71) étant conçus en deux couches.

9. Dispositif selon l'une des revendications de 1 à 8 **caractérisé en ce**
**que** dans la zone de l'extrémité située en amont du flux (67) du parcours de formage (2), un élément de refroidissement (79) pénétrant à l'intérieur du parcours de formage (2) est prévu.
